# EUROPEAN PATENT APPLICATION

(11) **EP 1 958 719 A1**
(43) Date of publication of application: **20.08.2008**
(21) Application number: 06833237.8
(22) Date of filing: 24.11.2006
(51) Int. Cl.: B23B 37/00, B26F 1/16

(54) **ULTRASONIC VIBRATION MACHINING METHOD AND FIBER REINFORCED RESIN PRODUCED BY SAID METHOD**

(30) Priority: 25.11.2005 JP 2005340945
(71) Applicant: Hamamatsu Foundation for Science and Technology Promotion, Hamamatsu-shi, Shizuoka 432-8561 (JP); Fuji Ultrasonic Engineering Co., Ltd., Shizuoka 435-0028 (JP)
(72) Inventor: YAGISHITA, Hukuzo, Numazu-shi Shizuoka 410-8501 (JP)
(74) Representative: Cohausz & Florack
(86) International application number: PCT/JP2006/323433
(87) International publication number: WO 2007/061044

(57) **Abstract**

An object of the present invention is to provide an ultrasonic vibration cutting method which can improve the smoothness of a worked surface as well as the service life of a drill by reducing the cutting resistance owing to excessive friction caused during a drilling process by reinforcing fibers included in a fiber reinforced plastic member, and a fiber reinforced plastic member manufactured by the method. According to the present invention, there is provided an ultrasonic vibration cutting method for drilling a workpiece by using a drill, to which ultrasonic torsional mode vibration in its rotational direction is applied. It is **characterized in that** said workpiece is a fiber reinforced plastic member including therein carbon fibers as reinforcing fibers as well as a fiber reinforced plastic member including therein carbon fibers as reinforcing fibers. The drilling by a drill, to which ultrasonic torsional mode vibration in its rotational direction is applied, is **characterized in that** a drilled surface(s) is (are) substantially smooth.

## Description

### BACKGROUND OF THE INVENTION

### Field of the Invention

The present invention relates to an ultrasonic vibration cutting method for drilling a workpiece by using a drill to which ultrasonic torsional mode vibration in its rotational direction is applied, and a fiber reinforced plastic member manufactured by the method.

### Description of Background Art

In recent years it has been realized to manufacture an airframe of aircraft or its structural elements by using fiber reinforced plastic member in order to reduce the weight of aircraft etc. The fiber reinforced plastic member has been provided as various kinds of forms such as those including therein carbon fibers as reinforcing fibers (Carbon Fiber Reinforced Plastic: CFRP) or those including therein glass fibers as reinforcing fibers (Glass Fiber Reinforced Plastic: GFRP) and is usually formed as a laminated body comprising a plurality of plastic plies in which the reinforced fibers in each ply are intersected with reinforcing fibers in adjacent plies orthogonally or obliqely (see e.g. Japanese Laid-open Patent Publication No. 126557/2005).

### Disclosure of the Invention

### Problems to be solved by the Invention

In usual the fiber reinforced plastic member is required to be drilled using a drill for passing a bolt etc. therethrough to connect structural elements each other when the fiber reinforced plastic members are used for an airframe of aircraft or its structural elements. However when a fiber reinforced plastic member (especially that using carbon as reinforcing fibers) is drilled with use of a conventional twist drill, there is caused problems that extremely large amount of heat is generated by cutting resistance and thus smoothness of the worked (i.e. drilled) surface is extremely deteriorated and also the service life of the drill is extremely shortened.

This is supposed that excessive cutting resistance will be caused by friction between the cutting edges of a drill and reinforcing fibers and thus excessive amount of heat is also generated during a drilling process of fiber reinforced plastic member using a conventional twist drill at a region in which the reinforcing fibers (e.g. carbon fibers) extend in parallel with the cutting direction and the generated heat gives an influence to plastic forming the matrix (e.g. epoxy etc.) of the fiber reinforced plastic and causes undulations on the worked surface.

The applicant of the present invention has noticed that the drill, to which the ultrasonic torsional mode vibration in its rotational direction is applied, can reduce the cutting resistance owing to the friction during a drilling process and accordingly will be able to solve the problems mentioned above.

### SUMMARY OF THE INVENTION

It is, therefore, an object of the present invention to provide an ultrasonic vibration cutting method which can improve the smoothness of a worked surface as well as the service life of a drill by reducing the cutting resistance owing to excessive friction caused during a drilling process by reinforcing fibers included in a fiber reinforced plastic member, and a fiber reinforced plastic member manufactured by the method.

### [Means for achieving the object]

For achieving the object of the present invention above, there is provided, according to claim 1, an ultrasonic vibration cutting method for drilling a workpiece by using a drill, to which ultrasonic torsional mode vibration in its rotational direction is applied, characterized in that said workpiece is a fiber reinforced plastic member including therein carbon fibers as reinforcing fibers.

It is preferable as defined in claim 2 that said reinforcing fibers are included in plastic as a knitted form, a woven form or a nonwoven fabric form.

It is preferable as defined in claim 3 that said fiber reinforced plastic member is formed as a lamination of a plurality of plastic plies, and that said plurality of plastic plies are laminated so that said reinforcing fibers in each plastic ply alternately intersect with reinforcing fibers in an adjacent plastic ply in an orthogonally or obliquely intersecting fashion.

It is preferable as defined in claim 4 that said drill has a candle shaped cutting edge having no marginal portion slide-contacting a working surface during a drilling process.

There is also provided, according to claim 5, a fiber reinforced plastic member including therein carbon fibers as reinforcing fibers. The drilling by a drill, to which ultrasonic torsional mode vibration in its rotational direction is applied, is characterized in that a drilled surface(s) is (are) substantially smooth.

It is preferable as defined in claim 6 that said reinforcing fibers are included in plastic ply as any one of a knitted form, a woven form or a nonwoven fabric form.

It is preferable as defined in claim 7 that said fiber reinforced plastic member is formed as a lamination of a plurality of plastic plies, and that said plurality of plastic plies are laminated so that said reinforcing fibers in each plastic ply alternately intersect with reinforcing fibers in an adjacent plastic ply in an orthogonally or obliquely intersecting fashion.

It is preferable as defined in claim 8 that said drill has a candle shaped cutting edge having no marginal portion slide-contacting a working surface during a drilling process.

### [Effects of the Invention]

According to the present inventions of claims 1∼3, since the drill, to which ultrasonic torsional mode vibration in its rotational direction is applied, is used when a fiber reinforced plastic member including therein carbon fibers as reinforcing fibers is drilled, it is possible to improve the smoothness of a worked surface as well as the service life of a drill by reducing the cutting resistance owing to excessive friction caused during a drilling process by reinforcing fibers included in a fiber reinforced plastic member.

According to the present invention of claim 4, since the drill has a candle shaped cutting edge having no marginal portion slide-contacting a working surface during a drilling process, it is possible to further suppress the cutting resistance owing to excessive friction caused during a drilling process and thus to obtain more smooth worked surface and to improve the service life.

According to the present inventions of claims 5∼7, in the fiber reinforced plastic member including therein carbon fibers as reinforcing fibers and drilled by a drill, to which ultrasonic torsional mode vibration in its rotational direction is applied, since the drilled surface is substantially smooth, it is possible to apply the fiber reinforced plastic member to an airframe of aircraft or to connecting portions of its structural elements.

According to the present invention of claim 8, since the drill has a candle shaped cutting edge having no marginal portion slide-contacting a working surface during a drilling process, it is possible to further suppress the cutting resistance owing to excessive friction caused during a drilling process and to apply the fiber reinforced plastic member to an airframe of aircraft or to connecting portions of its structural elements.

### DESCRIPTION OF THE PREFERRED EMBODIMENTS

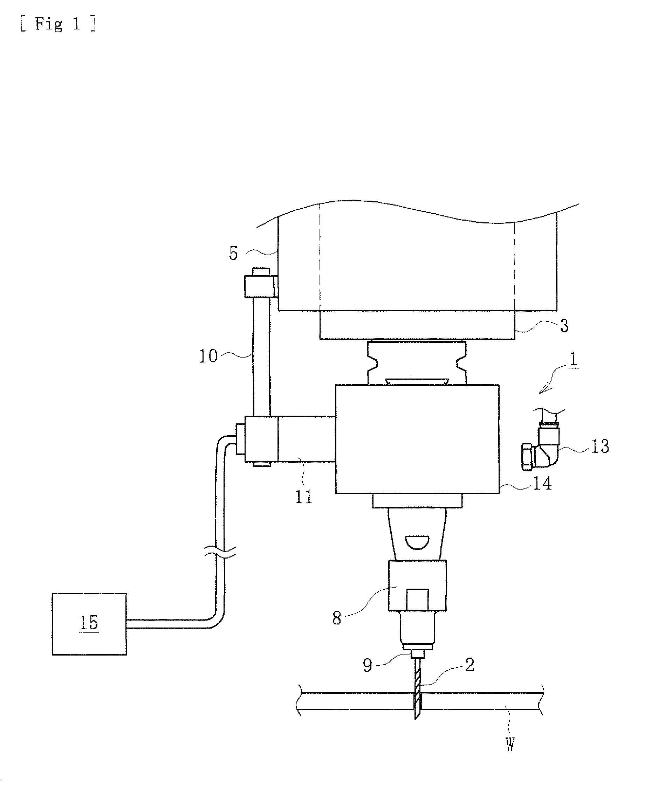

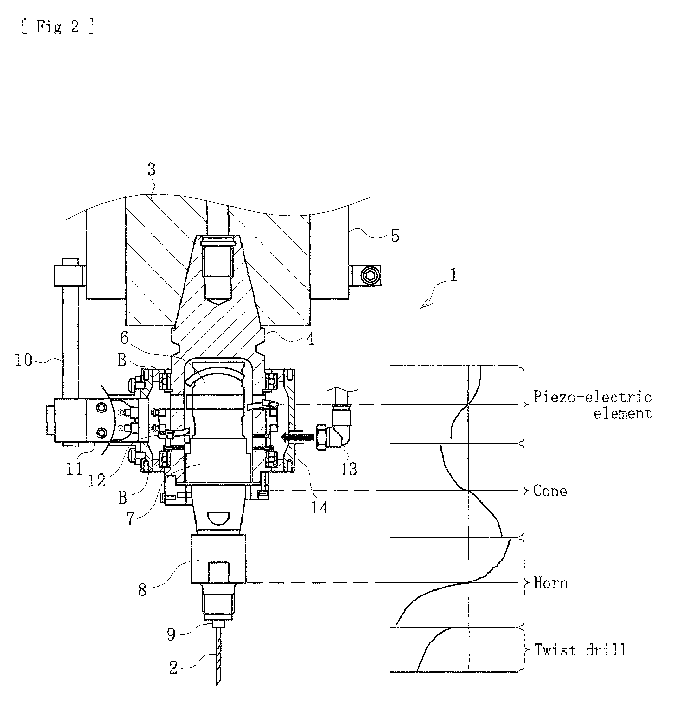

A preferred embodiment of the present invention will be hereinafter described with reference to accompanied drawings. As shown in Figs. 1 and 2, the cutting apparatus used in the ultrasonic vibration cutting method of the present invention is an ultrasonic torsional mode vibration cutting apparatus 1 for drilling a workpiece "W" using a twist drill 2, to which the ultrasonic torsional mode vibration is applied in its rotational direction. This apparatus comprises mainly a rotary side base 3 within a secured side base 5, a rotary member 4, a piezo-electric element 6, a cone 7, and a horn 8.

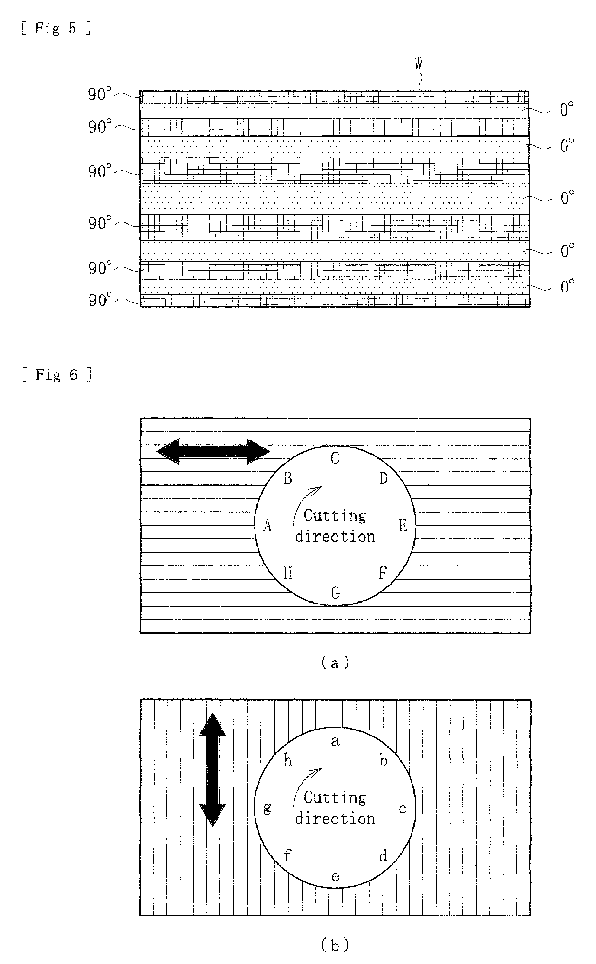

The workpiece "W" is a carbon fiber reinforced plastic (CFRP) member comprising a lamination of plurality of plastic plies in each ply of which carbon fibers are included as reinforcing fibers. As shown in a cross section of Fig. 5, the fiber reinforced plastic member comprises a plurality of plastic plies and the included reinforcing fibers in each ply are arranged so that they alternately intersect with reinforcing fibers in an adjacent ply orthogonally (i.e. at 90°) or obliquely. The reinforcing fibers may be included in plastic ply as any one of a knitted form, a woven form or a nonwoven fabric form.

The carbon fiber reinforced plastic (CFRP) member is manufactured firstly making a sheet shaped prepreg in which the carbon reinforced fibers are included in thermosetting resin such as epoxy. Then after having laminated a plurality of prepreg sheets with the extending direction of the reinforcing fibers being differentiated, the carbon fiber reinforced plastic (CFRP) member is finished by heating and pressurizing the laminated prepreg sheets. It should be noted that the present invention may be applied to a fiber reinforced plastic of not only multi plies but also mono ply, however it is preferable in mono ply that the reinforcing fibers is the knitted form or the woven form.

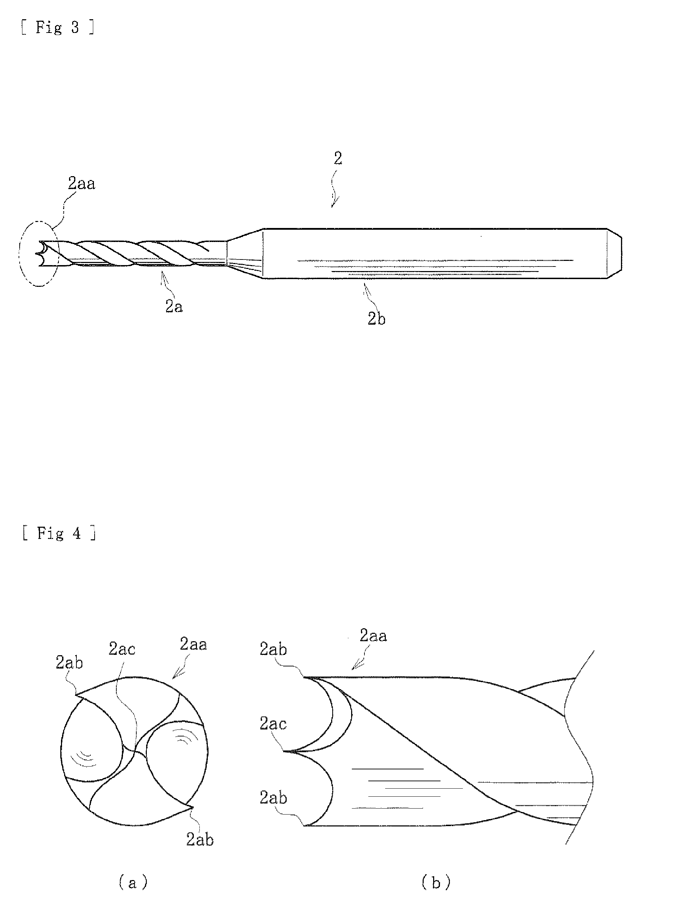

The ultrasonic torsional mode vibration cutting apparatus of the present invention for performing the drilling process at a predetermined position in the carbon fiber reinforced plastic (CFRP) member is shown by 1 (Fig. 1 and Fig. 2). The apparatus has the rotary side base 3 adapted to be rotated in a predetermined direction by a driving source (not shown) and the rotary member 4 is connected to the bottom of the rotary side base 3. The piezo-electric element 6 for generating the ultrasonic torsional mode vibration and the cone 7 for amplifying the torsional vibration and transmit it to the twist drill 2 are arranged within the rotary member 4. The torsional vibration transmitted to the cone 7 and horn 8 is amplified mechanically by themselves. A collet chuck 9 is connected to the bottom end of the horn 8 and a shank 2b (Fig. 3) of the twist drill 2 is adapted to be secured to the collet chuck 9.

An arm 10 extends downward from the secured side base 5 and a securing member 11 is mounted on the bottom end of the arm 10. The securing member 11 holds a supporting member 14, in which the rotary member 4 can be rotated, and the supporting member 14 covers the outer circumferential surface of the lower portion of the rotary member 4. That is, the rotary member 4 is rotationally supported by a bearing "B" with its outer race being secured on the supporting member 14 and its inner race being secured on the rotary member 4.

Brushes 12 mounted within the supporting member 14 are extending toward the piezo-electric element 6 and electric power can be supplied to the piezo-electric element 6 from a power source via the brushes 12. This enables to surely supply the electric power to the rotating piezo-electric element 6. A numeral 13 in Fig. 2 denotes an air blowing out means for blowing out air into the inside of the supporting member 14 to cool it.

As shown in Figs. 3 and 4, the twist drill 2 is a carbide fiber drill made of cemented carbide and comprises a body 2a and the shank 2b. A tip end 2aa of the body 2a of the twist drill 2 is a so-called candle shaped cutting edge and comprises a pair of cutting edges 2ab projected from its circumferential edge and a chisel edge 2ac projected longer than the cutting edges 2ab at its center.

The twist drill 2 has not any marginal portion which is normally formed on a conventional twist drill and adapted to be slide-contacted with a drilled surface during drilling process. It is preferable to apply a wear resistant coating on the surface of the twist drill 2 to extend its service life. The web thinning is applied on the chisel edge 2ac to reduce a thrust load during drilling process.

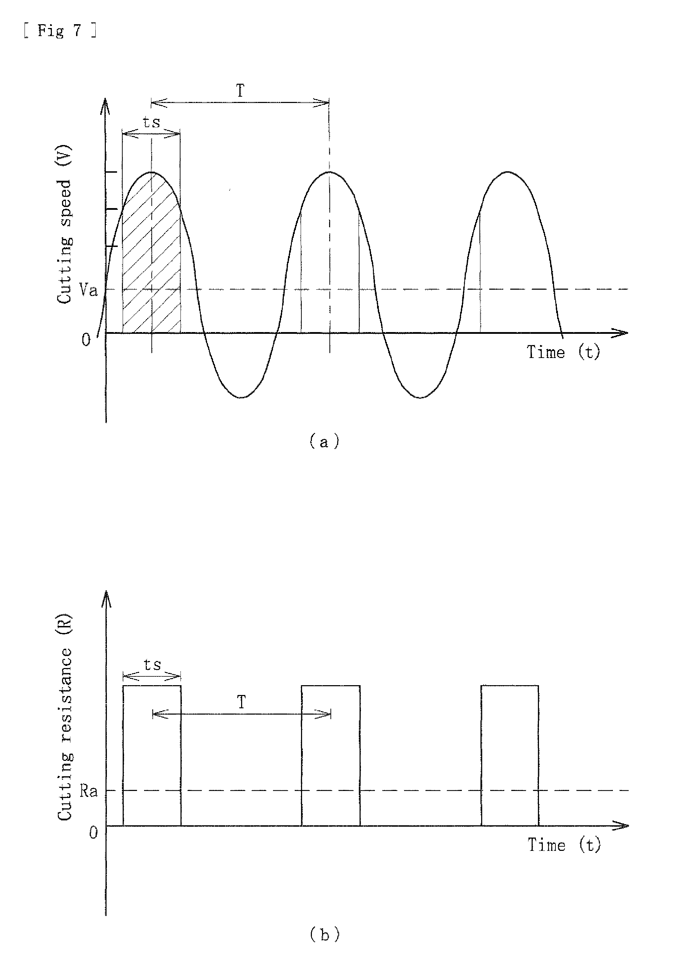

According to the ultrasonic torsional mode vibration cutting apparatus 1 of the present invention, the ultrasonic torsional mode vibration generated by the piezo-electric element 6 (strictly speaking, the ultrasonic torsional mode vibration amplified by cone 7 and the horn 8) is applied to the twist drill 2 by the driving force from the rotary side base 3. More in detail, the ultrasonic torsional mode vibration of a predetermined frequency "f" is applied to the twist drill 2 rotating at a rotational speed Va and accordingly the cutting is executed at an instantaneous cutting speed "V" (=Va+2πfa · cos 2πf · t) as shown in Fig. 7.

That is, actual cutting by the twist drill 2 is executed only a time period "ts" shown by hatching in Fig. 7(a) and thus an intermittent cutting of time period "ts" is executed microscopically. Accordingly it will be understood that the cutting speed "V" in the actual cutting time period "ts" becomes remarkably high and thus a large amount of cutting can be obtained instantaneously. On the other hand, as shown in Fig. 7(b), although the cutting resistance becomes large during actual cutting time period "ts", the equalized cutting resistance over one period drilling T becomes "Ra", and thus it will be understood that drilling with a relatively small cutting resistance is possible.

Accordingly it is possible to reduce the excessive cutting resistance caused by the presence of the reinforcing fibers (carbon fibers) included in the fiber reinforced plastic member and thus to suppress the heat generation by executing the drilling of the fiber reinforced plastic with use of the twist drill 2, to which the ultrasonic torsional mode vibration in its rotational direction is applied, in accordance with the present invention. In addition according to the twist drill 2 of the present invention, a large amount of cutting can be obtained instantaneously. Thus since a time period for the cutting edge of the twist drill 2 to slide in contact with the reinforcing fibers is shortened in places wherein the extending direction of the reinforcing fibers and the cutting direction of the twist drill 2 are substantially parallel with each other, it is possible to execute excellent cutting of the reinforcing fibers with suppressing the frictional resistance.

As shown in Fig. 6, when using a conventional twist drill of the prior art, excessive heat is generated by excessive cutting resistance owing to friction during cutting process at positions shown by reference characters "C" and "G" in Fig. 6(a) as well as "c" and "g" in Fig. 6(b) in which the cutting direction is substantially parallel to the extending direction of reinforcing fibers. Accordingly undulations such as craters would be caused on the worked surface of the matrix of the fiber reinforced plastic at positions shown by reference characters "D" and "H" in Fig. 6(a) as well as "d" and "h" in Fig. 6(b) in which the cutting direction is substantially 45°relative to the extending direction of reinforcing fibers. However such a problem can be solved by the present invention.

Thus according to the present invention it is possible to improve the accuracy and the smoothness of the drilled surface in the fiber reinforced plastic and also to suppress shortening of the service life of a drill owing to excessive heat caused by the cutting resistance due to excessive friction. In addition since the twist drill 2 used in the ultrasonic torsional mode vibration cutting apparatus 1 of the present invention has not any marginal portion slide-contacting a drilled surface during a drilling process, it is possible to more effectively reduce the cutting resistance owing to friction and thus to suppress the generation of heat during drilling process.

Accordingly it is possible to obtain a fiber reinforced plastic member having a substantially smooth worked surface by drilling the fiber reinforced plastic member using the twist drill 2, to which ultrasonic torsional mode vibration in its rotational direction is applied. The fiber reinforced plastic member obtained by such a way can be used to airframe of aircraft or its structural elements and applied to bore apertures e.g. for fastening.

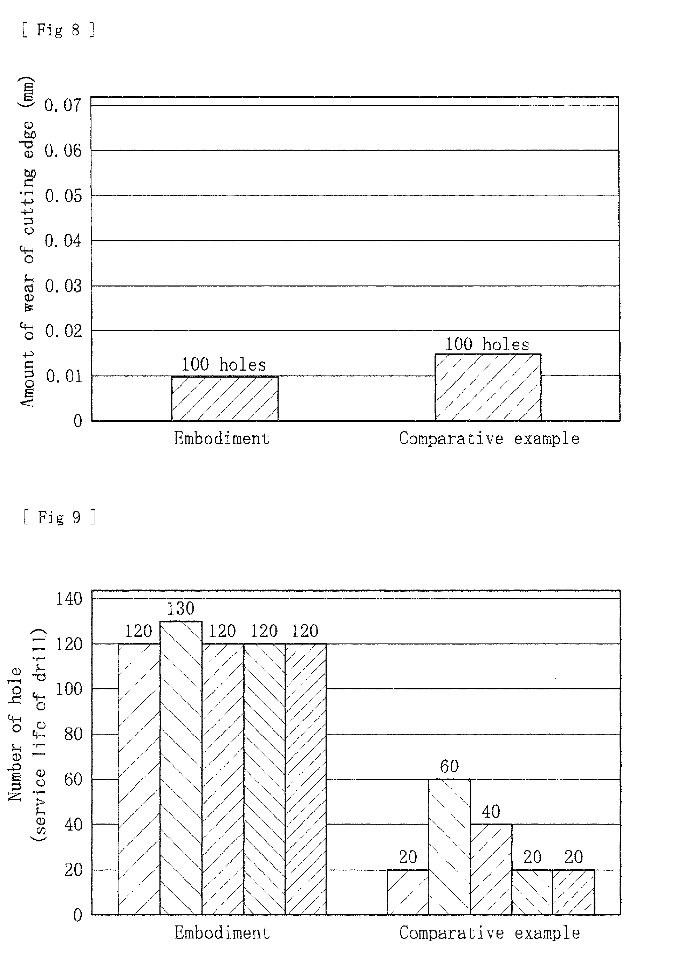

Then results of experiments obtained by comparing a case in which the drilling was executed by using the ultrasonic torsional mode vibration cutting apparatus of the present invention (shown by "Embodiment" in Figs. 8 and 9) with a case in which the drilling was performed by using a drill to which any ultrasonic torsional mode vibration is not applied are shown by "Comparative example" in Figs. 8 and 9. The drills used in either case are carbide fiber drills of 3 mm diameter and same in their shape and material etc.

Fig. 8 shows results obtained by measuring an amount of wear (mm) of the cutting edge of drills after having drilled 100 holes in a carbon fiber reinforced plastic sheet (thickness: 4.3 mm). It is apparent that the amount of wear is reduced in "Embodiment" comparing with "Comparative example".

Fig. 9 shows results of number of hole with providing five drills respectively in "Embodiment" and "Comparative example" and executing the drilling until the service life of drills has expired. It is apparent that the service life of drills in ""Comparative example" is 1/2 ∼ 1/6 of that in "Embodiment" and thus the present invention can reduce the amount of wear of cutting edge of drills during drilling process and improve the service life of drills.

Although the present invention has been described with reference to the preferred embodiment, the present invention is not limited to the illustrated explanations. For example, other types of drills (e.g. those having marginal portions or those having cutting edges of not a so-called "candle shape") may be used in place of the twist drill 2. The fiber reinforced plastic member to be drilled may be various kinds of fiber reinforced plastic member different in material of matrix, or types and directions of included reinforcing fibers.

### [Applicability in industry]

The present invention can be applied to other structural elements than the airframe of aircraft and its structural elements if the drill used is that to which the ultrasonic torsional mode vibration in its rotational direction is applied and the fiber reinforced plastic used is that in which the worked surface i.e. drilled surface is substantially smooth.

### BRIEF DESCRIPTION OF THE DRAWINGS

Fig. 1 is a schematic view showing an ultrasonic torsional mode vibration cutting apparatus of a preferred embodiment of the present invention;
Fig. 2 is a schematic cross sectional view showing an inside arrangement of the ultrasonic torsional mode vibration cutting apparatus of Fig. 1;
Fig. 3 a side elevation view showing a twist drill used in the ultrasonic torsional mode vibration cutting apparatus of Fig. 1;
Fig. 4(a) is an enlarged front elevation view showing the twist drill of Fig. 3, and Fig. 4(b) is an partially enlarged side elevation view near a tip of the twist drill of Fig. 3;
Fig. 5 is a schematic cross sectional view of a fiber reinforced plastic (CFRP) member to which the method of the present invention is applied;
Fig. 6 is explanatory view for explaining a relation between the cutting direction of the twist drill and the extending direction of the reinforcing member wherein Fig. 6(a) shows that the reinforcing fibers extend in a left-right direction of the drawing and Fig. 6(b) shows that the reinforcing fibers extend in a up-down direction of the drawing;
Fig. 7(a) is an explanatory view showing the cutting speed of the circumferential cutting edge of twist drill in relation to time, and Fig 7(b) is an explanatory view showing the cutting resistance applied to the twist drill in relation to time used in the ultrasonic torsional mode vibration cutting apparatus of Fig. 1;
Fig. 8 is a graph showing results of experiment for comparing an amount of wear between the present invention and a comparative example; and
Fig. 9 is a graph showing results of experiment for comparing a service life of a carbide fiber drill between the present invention and a comparative example.

### [Description of the Symbols]

- 1: ultrasonic torsional mode vibration cutting apparatus
- 2: twist drill
- 3: rotary side base
- 4: rotary member
- 5: secured side base
- 6: piezo-electric element
- 7: cone
- 8: horn
- 9: collet chuck
- 10: arm
- 11: securing member
- 12: brushes
- 13: air blowing out means
- 14: supporting member
- 15: power source
- W: workpiece (fiber reinforced plastic member)

## Claims

1. An ultrasonic vibration cutting method for drilling a workpiece (W) by using a drill (2), to which ultrasonic torsional mode vibration in its rotational direction is applied, **characterized in that** said workpiece (W) is a fiber reinforced plastic member including therein carbon fibers as reinforcing fibers.

2. An ultrasonic vibration cutting method of claim 1 wherein said reinforcing fibers are included in plastic as a knitted form, a woven form or a nonwoven fabric form.

3. An ultrasonic vibration cutting method of claim 1 wherein said fiber reinforced plastic member is formed as a lamination of a plurality of plastic plies, and wherein said plurality of plastic plies are laminated so that said reinforcing fibers in each plastic ply alternately intersect with reinforcing fibers in an adjacent plastic ply in an orthogonally or obliquely intersecting fashion.

4. An ultrasonic vibration cutting method of any one claims 1∼3 wherein said drill (2) has a candle shaped cutting edge having no marginal portion slide-contacting a drilled surface during a drilling process.

5. A fiber reinforced plastic member including therein carbon fibers as reinforcing fibers and drilled by a drill, to which ultrasonic torsional mode vibration in its rotational direction is applied, **characterized in that** a drilled surface(s) is (are) substantially smooth.

6. A fiber reinforced plastic member of claim 5 wherein said reinforcing fibers are included in plastic ply as any one of a knitted form, a woven form or a nonwoven fabric form.

7. A fiber reinforced plastic member of claim 5 wherein said fiber reinforced plastic member is formed as a lamination of a plurality of plastic plies, and wherein said plurality of plastic plies are laminated so that said reinforcing fibers in each plastic ply alternately intersect with reinforcing fibers in an adjacent plastic ply in an orthogonally or obliquely intersecting fashion.

8. A fiber reinforced plastic member of any one of claims 5∼7 wherein said drill (2) has a candle shaped cutting edge having no marginal portion slide-contacting a drilled surface during a drilling process.
